(19) Europäisches Patentamt
European Patent Office
Office européen des brevets

(11) Veröffentlichungsnummer: **0 503 420 A1**

(12) # EUROPÄISCHE PATENTANMELDUNG

(21) Anmeldenummer: **92103535.8**

(51) Int. Cl.[5]: **C08F 230/08**

(22) Anmeldetag: **02.03.92**

(30) Priorität: **15.03.91 DE 4108359**

(43) Veröffentlichungstag der Anmeldung:
**16.09.92 Patentblatt 92/38**

(84) Benannte Vertragsstaaten:
**BE CH DE DK FR GB GR IT LI NL SE**

(71) Anmelder: **HOECHST AKTIENGESELLSCHAFT**
**Postfach 80 03 20**
**W-6230 Frankfurt am Main 80(DE)**

(72) Erfinder: **Hickel, Werner, Dr.**
**Val.-Streuber-Strasse 66**
**W-6800 Mannheim 24(DE)**
Erfinder: **Lupo, Donald, Dr.**
**Am Holderbusch 28**
**W-6239 Eppstein/Taunus 2(DE)**
Erfinder: **Prass, Werner, Dr.**
**Bahnstrasse 19**
**W-6500 Mainz 1(DE)**
Erfinder: **Scheunemann, Ude, Dr.**
**Feldbergstrasse 12**
**W-6237 Liederbach(DE)**
Erfinder: **Wilharm, Peter, Dr.**
**Am Scheuerling 3**
**W-6200 Wiesbaden 67(DE)**

(54) **Amphiphile Polymere mit Silan-Einheiten und Film aus mindestens einer monomolekularen Schicht daraus.**

(57) Es werden amphiphile, silanylgruppenhaltige Copolymere aus Derivaten der Acryl- und/oder Methacrylsäure beschrieben, die zur Herstellung von Schichtelementen nach der Langmuir-Blodgett-Technik geeignet sind. Solche Schichtelemente können für optische Wellenleitersysteme und zur Herstellung von optischen Filtern sowie für lithographische Zwecke verwendet werden.

EP 0 503 420 A1

Die Erfindung betrifft spezielle amphiphile Copolymere, die Silan-Einheiten enthalten, einen Film aus mindestens einer monomolekularen Schicht dieser Moleküle auf einem festen Schichtträger (= sogenannte Schichtelemente), und ein Verfahren zur Herstellung der Schichtelemente sowie deren Verwendung.

Zur Herstellung von geordneten Schichten organischer Polymerer mit langkettigen Seitengruppen wird überwiegend das Langmuir-Blodgett (LB)-Verfahren benutzt. Bei diesem Verfahren werden Moleküle auf einer Wasseroberfläche gespreitet und durch Verkleinerung der Fläche pro Molekül die langen Alkylseitengruppen parallel angeordnet. Bei konstantem Schub werden die Moleküle durch Ein- und Austauchen auf ein Substrat aufgezogen. Pro Tauchgang wird dabei eine monomolekulare Schicht unter Erhalt ihrer Ordnung übertragen.

Für den Aufbau von LB-Filmen verwendet man amphiphile Moleküle, d.h. Moleküle, die ein hydrophiles Ende (einen "Kopf") und ein hydrophobes Ende (einen "Schwanz") haben. Um eine höhere Stabilität der LB-Filme zu erreichen, wurden auch schon polymere LB-Filme hergestellt.

Die Herstellung von polymeren LB-Filmen kann durch Polymerisation von ungesättigten Amphiphilen nach Bildung des Monomerfilms erfolgen. Man hat aber auch schon unmittelbar organische Polymere mit langen Alkylseitenketten zur Schichtherstellung eingesetzt (WO 83/03165, R. Elbert, A. Laschewsky und H. Ringsdorf, J. Am. Chem. Soc. 107, 4134-4141 (1985)). Auch Filme aus Copolymeren, wurden bereits beschrieben (A. Laschewsky, H. Ringsdorf, G. Schmidt und J. Schneider, J. Am. Chem. Soc. 109, 788-796 (1987)). Bei diesen Copolymeren trägt eines der Comonomeren mindestens eine lange Alkylkette, während das zweite Monomer wasserlöslich ist, zumindest aber polare und hydrophile Gruppen trägt. Sollen Schichten aus solchen Polymeren als Resistmaterialien eingesetzt werden, wie z.B. von R. Jones, C.S. Winter, R.H. Tredgold, P. Hodge und A. Hoorfar, Polymer 28, 1619-1626 (1987) beschrieben, so stellt sich das Problem der nicht ausreichenden Ätzstabilität dieser Filme beim Plasmaätzen.

Aus der Resisttechnologie ist nun aber bekannt, daß sich die Ätzstabilität von Photoresists im Sauerstoff-Plasma durch den Einbau von Silizium-Verbindungen drastisch erhöhen läßt. So wurden aliphatische und/oder aromatische hydroxylgruppentragende polymere Bindemittel beschrieben, die in der Seitenkette Silanylgruppen enthalten, die als Bestandteile eines lichtempfindlichen Gemisches diesem eine erhöhte Plasmaätzbeständigkeit verleihen (EP-A-0337188). Die lichtempfindliche Schicht, die durch Aufschleudern einer Resistlösung, welche ein solches Bindemittel und Verbindungen aus der Stoffklasse der o-Chinondiazide enthält, auf das Substrat gebildet wird, hat eine Schichtdicke von 0,3 bis 10 µm. Von Nachteil für mikroelektronische Anwendungen z.B. die Elektronenstrahllithographie mit hoher Auflösung ist die relativ hohe Schichtdicke derartiger Resistfilme.

Ferner sind Langmuir-Blodgett-Schichten von amphiphilen Polysiloxanen bekannt (Adv. Mater. 3 (1991), 27). Diese weisen zwar eine gute Ätzbeständigkeit im Sauerstoffplasma auf, sind aber durch die Siloxanhauptkette für viele Anwendungen nur unzureichend temperaturbeständig.

Es besteht daher die Aufgabe Polymere herzustellen, aus denen sich Langmuir-Blodgett-Filme bilden lassen, die über eine verbesserte Temperatur- und Plasmaätzstabilität verfügen.

Gegenstand der Erfindung sind amphiphile, silanylgruppenhaltige Copolymere enthaltend Struktureinheiten abgeleitet von mindestens einem Monomer der allgemeinen Formel I

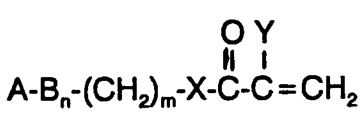

(I)

und mindestens einem Monomer der allgemeinen Formel II

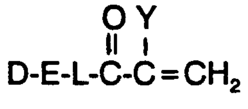

(II),

wobei

| | |
|---|---|
| A- = | $CH_3$- oder $CF_3$- ist, |
| -B- = | -$CH_2$- oder -$CF_2$- ist, |
| n | eine ganze Zahl von 5 bis 25 ist, |
| m | eine ganze Zahl von Null bis 12 ist, |

-X- = -O-, $-NR^1-$ oder -Z- ist, worin
$R^1$- = H-, $CH_3-(CH_2)_n-$ oder $CF_3-(CF_2)_n-(CH_2)_m-$
-Z- = $-X'-(CH_2)_p-X'$ oder

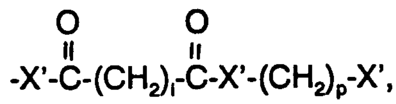

p eine ganze Zahl von 2 bis 10,
l eine ganze Zahl von 1 bis 10 und
-X'- = -O- oder $-NR^1-$ ist,
-Y = -H, $-CH_3$, -CN, -Cl, -Br oder -F ist,
-D = $-SiR^2(SiR^2_3)_2$, $-Si(SiR^2_3)_3$, $-SiR^2_2-SiR^2_3$ oder $-(SiR^2_2)_2-SiR^2_3$ ist, worin $R^2$ $C_1$-$C_3$-Alkyl bedeutet,
-E- = $C_1$-$C_4$-Alkylen ist und
-L- = -O-, $-NR^1-$,

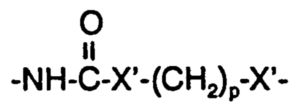

oder

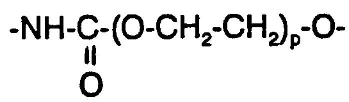

ist.

Bevorzugte Struktureinheiten abgeleitet von Monomeren der Formel I tragen nur eine lange Seitenkette, d.h. die funktionelle Gruppe -X- = -O-, -NH- oder -Z- und -X'- = -O- oder -NH-.

Bevorzugte Struktureinheiten abgeleitet von Monomeren der allgemeinen Formel II sind solche, worin
-D = $-(SiR^2_2)-SiR^2_3$ ist und $R^2$ $C_1$-$C_3$-Alkyl, insbesondere Methyl bedeutet,
-E- = $C_2$-Alkylen ist,
-L- = -NH- oder

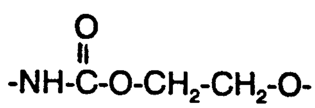

ist und
-Y = -H oder $-CH_3$ ist.

Die Synthese der Monomeren der allgemeinen Formel I kann nach bekannten Methoden durch Umsetzung einer Vinylcarbonsäure oder eines aktivierten Derivates dieser Carbonsäure, beispielsweise eines Säurehalogenids, mit einem langkettigen Alkohol oder Amin der Formel IV

$A - B_n - (CH_2)_m - X' - H$ (IV),

erfolgen, wobei A-, -B-, -X'-, m und n die obengenannte Bedeutung haben.

Monomere der allgemeinen Formel I, die Struktureinheiten Z enthalten, lassen sich erstens durch Umsetzung einer Dicarbonsäure der allgemeinen Formel (V)

$HOOC - (CH_2)_1 - COOH$ (V)

oder eines aktivierten Derivates dieser Dicarbonsäure, wie beispielsweise eines Säureanhydrides, Säureesters oder Säurehalogenids, mit einem ungesättigten Alkohol oder Amin der allgemeinen Formel (VI)

$$CH_2 = \overset{Y}{\overset{|}{C}} - \overset{O}{\overset{\|}{C}} - X' - (CH_2)_p - X' - H \qquad \text{(VI)},$$

worin l, p, Y und X' die obengenannte Bedeutung haben,
zum Monoester und anschließender Kondensation mit einem langkettigen Alkohol oder Amin der allgemeinen Formel VII

$A - B_n - (CH_2)_m - X' - H$ (VII)

worin A, B, X', n und m die obengenannte Bedeutung haben, herstellen.

Sie lassen sich aber auch durch die umgekehrte Reaktionsfolge darstellen, d.h. durch Umsetzung der Dicarbonsäure der Formel (V) oder eines ihrer reaktiven Derivate mit einem langkettigen Alkohol oder Amin der Formel (VII) mit nachfolgender Veresterung des Zwischenproduktes mit dem ungesättigten Alkohol der Formel (VI).

Die silanylgruppenhaltigen Monomeren der allgemeinen Formel II können durch Umsetzung einer Vinylcarbonsäure oder eines aktivierten Derivates derselben mit einem Silylierungsreagens der Formel VIII

$D - E - L' - H$ (VIII),

worin $-L'- = -NR^1$ oder -O- ist und $R^1$, D und L die obengenannte Bedeutung haben, hergestellt werden.

Silylierungsreagenzien gemäß Formel VIII werden in der EP-A-0 336 276 beschrieben.

Die Monomeren der allgemeinen Formel II können ferner durch Umsetzung von isocyanatgruppenhaltigen Silylierungsreagenzien der Formel IX

$D - E - N = C = O$ (IX),

worin D und E die obengenannte Bedeutung haben,
mit einem ungesättigten Alkohol oder Amin der Formel VI oder der Formel X

$$CH_2 = \underset{Y}{\underset{|}{C}} - \underset{O}{\underset{\|}{C}} - O - (CH_2 - CH_2 - O)_p - H \qquad \text{(X)}$$

synthetisiert werden.

Auch Copolymere (d.h. Ter- und Multipolymere), die zusätzlich zu den Struktureinheiten, die von Monomeren gemäß Formel I und II abgeleitet sind, mindestens eine Struktureinheit, abgeleitet von weiteren funktionellen Comonomeren enthalten, z.B. solchen, die zu einer strahleninduzierten Vernetzung der Polymeren führen, sind für die Zwecke der Erfindung geeignet. Weitere Comonomere können ebenfalls Monomere mit langen Alkylketten, z.B. Monomere, wie sie in den oben genannten Publikationen von Jones et al., Elbert et al. und Laschewsky et al. sowie in WO 83/03165 beschrieben sind, sein. Darüber hinaus sind hydrophile, vorzugsweise wasserlösliche Vinylmonomere, wie z.B. Itaconsäure, Fumarsäure, Maleinsäure, Acryl-, Cyanoacryl- und Methacrylsäure oder Derivate davon als Comonomer geeignet.

Besonders bevorzugt sind solche Comonomere, die strahlenvernetzbare Einheiten tragen.

Der Anteil von Struktureinheiten abgeleitet von silanylgruppenhaltigen Monomeren gemäß Formel II im Copolymeren kann 5 bis 98, vorzugsweise 30 bis 85 und insbesondere 30 bis 70 Mol.-%, betragen. Der Anteil von Struktureinheiten abgeleitet von Monomeren gemäß Formel I im Copolymeren kann 95 bis 2, vorzugsweise 70 bis 15 und insbesondere 70 bis 30 Mol.-%, betragen, wobei sich die Anteile der Struktureinheiten auf insgesamt 100 Mol.-% ergänzen.

Bei Copolymeren, die Struktureinheiten enthalten, die von mindestens je einem Monomeren gemäß Formel I und II und mindestens einem weiteren funktionellen Comonomeren, bevorzugt mit einer strahlenvernetzbaren Einheit, abgeleitet sind, kann der Anteil der Struktureinheiten abgeleitet von Monomeren der Formel I 90 bis 5, vorzugsweise 60 bis 20 Mol.-%, von Monomeren der Formel II, 5 bis 90, vorzugsweise 20 bis 60 Mol.-% und von weiteren funktionellen Comonomeren 5 bis 60, vorzugsweise 20 bis 40 Mol.-% betragen, wobei sich die Anteile der Struktureinheiten auf insgesamt 100 Mol.-% ergänzen.

Die Polymerisation wird vorzugsweise radikalisch unter Zusatz eines radikalischen Initiators nach üblichen Verfahren durchgeführt.

Die erfindungsgemäßen Polymere bzw. Filme können auch mit weiteren zweckdienlichen Komponenten abgemischt werden, beispielsweise mit Farbstoffen, amphiphilen Vernetzern, monomeren oder polymeren Amphiphilen. Der Anteil dieser Zusatzstoffe in solchen Mischungen kann 1 bis 80 Gew.-% betragen.

Zur Herstellung der Filme gemäß der Erfindung werden die organischen Polymeren oder Mischungen, die die Polymeren gemäß der Erfindung, vorzugsweise zu 10 - 100 Gew.-% enthalten, in einem im wesentlichen flüchtigen, mit Wasser nicht mischbaren Lösungsmittel gelöst und auf die Oberfläche einer wäßrigen Lösung in einer Filmwaage gebracht (= gespreitet). Aus der Abmessung der Oberfläche, dem Spreitvolumen und der Konzentration der Lösung wird die mittlere Fläche pro Repetiereinheit berechnet. Phasenübergänge bei der Kompression der Moleküle lassen sich in der Schub-Flächen-Isotherme verfolgen.

Die Moleküle werden mit einer Barriere zusammengeschoben, wobei die Alkylketten bei wachsender Oberflächendichte im wesentlichen senkrecht zur Grenzschicht orientiert werden. Während der Kompression entsteht durch Selbstorganisation der Moleküle an der Grenzschicht ein hochgeordneter monomolekularer Film, dessen konstante Schichtdicke im wesentlichen durch die Kettenlänge der Alkylseitenkette der Polymeren und deren Tiltwinkel (das ist der Winkel, um den die Molekülketten auf der Wasseroberfläche gegen die Normale gekippt sind) bestimmt wird. Die typische Dicke eines solchen Films liegt bei 0,5 - 3 nm.

Der Film wird bei konstantem Schub durch Eintauchen oder Austauchen eines geeigneten Trägers unter Erhalt der Ordnung von der Wasseroberfläche abgenommen.

Als Subphase für die Monofilmherstellung dienen meist Wasser oder wäßrige Lösungen. Es sind aber auch andere Flüssigkeiten mit hoher Oberflächenspannung, wie z.B. Glyzerin, Glykol, Dimethylsulfoxid, Dimethylformamid oder Acetonitril verwendbar.

Als Träger kommen beliebige feste, vorzugsweise dimensionsstabile Substrate aus unterschiedlichen Materialien in Betracht. Die als Schichtträger dienenden Substrate können beispielsweise transparent oder lichtundurchlässig, elektrisch leitend oder isolierend sein. Das Substrat kann hydrophob oder hydrophil sein. Die Oberfläche des Substrats, auf die die LB-Schicht aufgebracht wird, kann hydrophobiert sein. Die zu beschichtende Oberfläche des Substrats sollte möglichst rein sein, damit die Ausbildung einer dünnen, geordneten Schicht nicht gestört wird. Insbesondere die Anwesenheit von oberflächenaktiven Stoffen auf der zu beschichtenden Oberfläche der Substrate kann die Schichtherstellung beeinträchtigen. Es ist möglich, die als Schichtträger dienenden Substrate auf der zu beschichtenden Oberfläche vor dem Aufbringen der LB-Filme zunächst mit einer Zwischenschicht zu versehen, um z.B. die Haftung des Films auf dem Substrat zu verbessern.

Als Materialien für die Substrate können beispielsweise Metalle, wie etwa Gold, Platin, Nickel, Palladium, Aluminium, Chrom, Niob, Tantal, Titan, Stahl und dergleichen verwendet werden. Andere geeignete Materialien für die Substrate sind Kunststoffe, wie beispielsweise Polyester, etwa Polyethylenterephthalat oder Polybutylenterephthalat, Polyvinylchlorid, Polyvinylidenchlorid, Polytetrafluorethylen, Polystyrol, Polyethylen oder Polypropylen.

Insbesondere kommen Halbleiter, wie Silizium, Germanium oder Galliumarsenid oder auch Glas, Siliziumdioxid, keramische Werkstoffe oder Celluloseprodukte für die Substrate in Betracht. Die Oberfläche von Glas und anderen hydrophilen Substraten kann, sofern erforderlich, in an sich bekannter Weise durch Umsetzung mit Alkylsilanen oder Hexamethyldisilazanen hydrophobiert werden. Die Auswahl der Substratmaterialien richtet sich in erster Linie nach dem Verwendungszweck der erfindungsgemäßen Schichtelemente. Für optische Elemente werden in der Regel transparente, lichtdurchlässige Substrate als Schichtträger eingesetzt. Werden die erfindungsgemäßen Schichtelemente beispielsweise in der Elektronik oder bei elektrochemischen Prozessen verwendet, dienen als Substrate insbesondere elektrisch leitfähige Materialien, wie Metalle oder metallische Oberflächenschichten, beispielsweise auf Kunststoffolien oder Glas.

Die als Träger für die erfindungsgemäßen Filme dienenden Substrate können, je nach Verwendungszweck, beliebige Formen aufweisen. Beispielsweise können sie film-, folien-, platten-, bandförmig oder auch zylinderförmig sein oder unter anderen beliebigen Formen ausgewählt werden. Im allgemeinen wird es sich bei den Schichtträgern um flache, ebene Substrate handeln, wie z.B. Filme, Folien, Platten, Bänder und dergleichen. Die zu beschichtende Oberfläche der Substrate ist vorzugsweise glatt, wie es für die Herstellung von LB-Filmen üblich ist. Bei flachen, ebenen Substraten können die erfindungsgemäßen Filme auf eine oder beide Oberflächen des Substrats aufgebracht werden.

Die aus den erfindungsgemäßen Polymeren gut herstellbare Multischichtstruktur zeichnet sich durch die geringe Zahl von Defektstellen sowie eine gute Temperatur- und Ätzstabilität aus.

Solche Filme auf Substraten eignen sich beispielsweise für optische Wellenleitersysteme oder zur

Herstellung von Filtern für optische Zwecke. Substrate mit Filmen aus Copolymeren gemäß der Erfindung, die strahlenvernetzbare Einheiten enthalten, werden auch für lithographische Zwecke verwendet. Aufgrund der geringen kritischen Oberflächenspannung sind die Filme auch zur Verbesserung der Reibungseigenschaften von Materialien und zur Herstellung von Schutzschichten geeignet.

Die Erfindung wird durch die nachfolgenden Beispiele näher erläutert. Die für die Monomersynthese verwendeten Lösungsmittel werden nach üblichen Methoden getrocknet (z.B. durch Molekularsieb). Die Polymerisationen werden in einer Inertgasatmosphäre, zum Beispiel von Stickstoff, durchgeführt.

Beispiel 1: Synthese des Disilan-Monomers 1

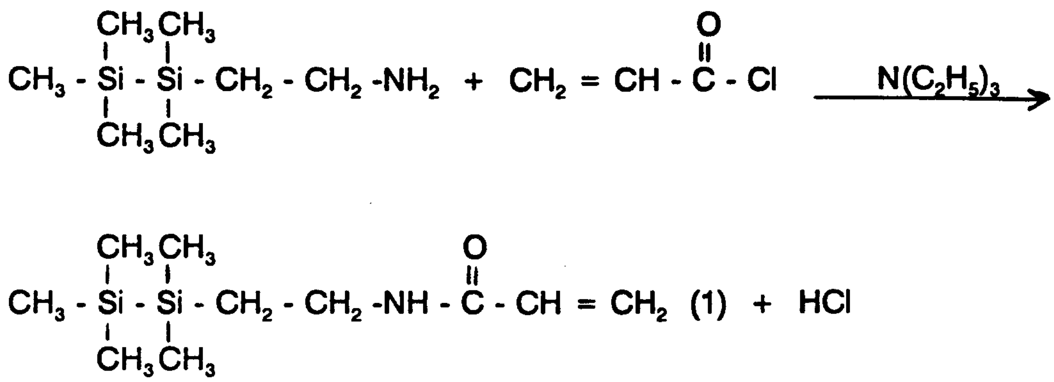

(1)

5,8 g 2-Pentamethyldisilylethylaminhydrochlorid werden in etwa 100 ml Dichlormethan gelöst und zwei Mal mit je 100 ml 2 M NaOH ausgeschüttelt. Die organische Phase wird mit $Na_2SO_4$ getrocknet und das Lösemittel im Vakuum entfernt. Die zurückbleibende klare Flüssigkeit wird mit 50 mg 2,6-Di-tert.-butyl-p-kresol versetzt, und in 40 ml wasserfreiem Tetrahydrofuran (auch Dichlormethan, Dioxan und Toluol sind geeignete Lösemittel) gelöst, auf 2°C abgekühlt, 4,5 ml wasserfreies Triethylamin zugegeben und bei 2°C innerhalb von 30 Minuten 2,7 ml Acrylsäurechlorid, gelöst in 30 ml wasserfreiem Tetrahydrofuran zudosiert. Danach wird das Eisbad entfernt und das Reaktionsgemisch wird nach Erreichen einer Temperatur von 20 - 25°C weitere 2 Stunden gerührt. Anschließend wird die Reaktionsmischung nach Zugabe von 100 ml Dichlormethan zwei Mal mit je 50 ml 1 M HCl ausgeschüttelt, die organische Phase mit $Na_2SO_4$ getrocknet und das Lösemittel im Vakuum entfernt. Der zurückbleibende Feststoff wird durch Umkristallisation aus n-Hexan gereinigt. Man erhält 4,95 g (80 % d. Theorie) eines weißen Pulvers.

$^1$H-NMR (100 MHz, $CDCl_3$):

$\delta$ = -0,1 - 0,1 (m, 15H, Si-$CH_3$), 0,7 - 1,0 (m, 2H, Si-$CH_2$), 3,1 - 3,5 (m, 2H, N-$CH_2$), 5,2 - 5,8 (m, 2H, -NH- und =CH-CO), 5,8 - 6,4 (m, 2H, =$CH_2$).

Beispiel 2: Synthese des Disilan-Monomers 2

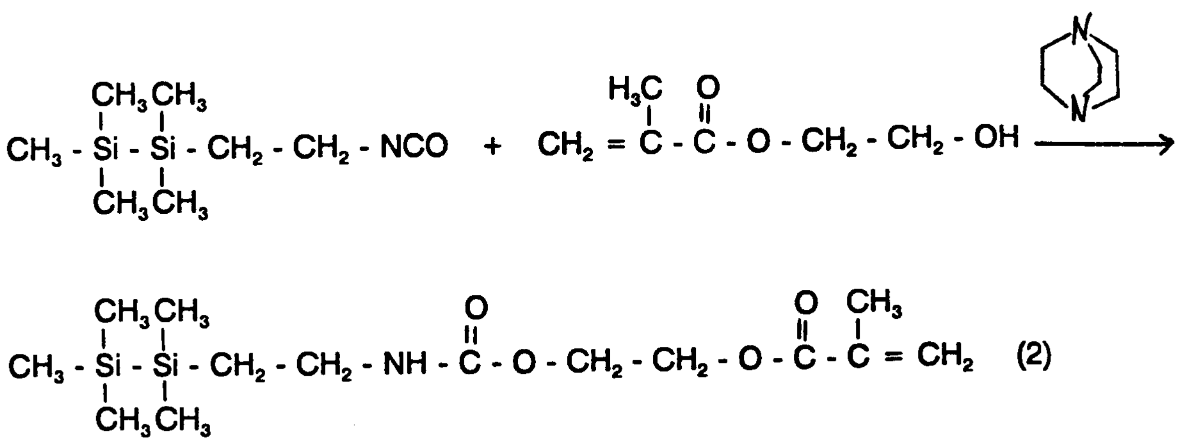
(2)

6,04 g des Disilan-Isocyanats werden zusammen mit 35 mg 1,4-Diazabicyclo[2.2.2]octan in 50 ml Dichlormethan gelöst. Man kühlt die Lösung im Eis/Kochsalz-Bad auf 0°C ab und dosiert innerhalb von 15 Minuten eine Mischung aus 4,25 ml 2-Hydroxyethylmethacrylat, 5 mg 2,6-Di-tert.-butyl-p-kresol und 25 ml Dichlormethan zu. Nach beendeter Zugabe wird das Reaktionsgemisch innerhalb von 30 Minuten auf Siedetemperatur erhitzt und 20 Stunden bei Siedetemperatur gekocht. Nach Abkühlen auf eine Temperatur von 20 - 25°C wird die Reaktionsmischung je zwei Mal mit je 100 ml 1 M HCl und Wasser ausgeschüttelt, die organische Phase mit $Na_2SO_4$ getrocknet und das Lösemittel im Vakuum entfernt. Die zurückbleibende ölige Substanz wird mit 50 mg 2,6-Di-tert.-butyl-p-kresol versetzt und säulenchromatographisch gereinigt (Laufmittel: n-Hexan/Ethylacetat 3:1 (relative Volumina)). Man erhält 15 g (65 % d. Theorie) eines farblosen Öls.

$^1$H-NMR (100 MHz, $CDCl_3$):

$\delta$ = -0,1 - 0,1 (m, 15H, Si-$CH_3$), 0,7 - 1,0 (m, 2H, Si-$CH_2$), 1,7 - 1,9 (m, 3H, C-$CH_3$), 3,1 - 3,5 (m, 2H, N-$CH_2$), 4,2 - 4,3 (s, 4H, O-$CH_2$-$CH_2$-O-CO), 4,4 - 4,7 (m, 1H, NH), 5,4 - 6,2 (m, 2H, =$CH_2$).

Beispiel 3: Radikalische Copolymerisation des Disilan-Monomers 1 mit Acrylsäure-N-octadecylamid

2,0 g Acrylsäure-N-octadecylamid und 0,622 g des Disilan-Monomers 1 werden in 20 ml Tetrahydrofuran gelöst und mit 10,2 mg Azo-bis-isobutyronitril versetzt. Die Lösung wird in einen Dreihalskolben mit Rückflußkühler (mit Gasableitungsrohr und Blasenzähler), Thermometer und Gaseinleitungsrohr gegeben und bei einer Temperatur von 20 - 25°C eine Stunde lang mit Stickstoff durchspült. Dann wird die Reaktionsmischung bis zur Siedetemperatur erhitzt und 7 Stunden unter ständigem Rühren (Magnetrührer) bei Siedetemperatur gekocht. Das Polymere wird durch Eingießen der auf eine Temperatur von 20 - 25°C abgekühlten Reaktionslösung in Methanol ausgefällt und abgesaugt. Um das Produkt von Restmonomer zu befreien, wird es noch zwei Mal in Tetrahydrofuran gelöst und durch Eingießen in Methanol ausgefällt. Man erhält 1,9 g einer weißen feinkörnigen Masse, die in Methanol unlöslich und in Tetrahydrofuran löslich ist. Eine Molmassenbestimmung mittels Gelpermeationschromatographie ergibt ein $M_w$ von 4.800 und ein $M_n$ von 2.600 Dalton (Polystyrol-Eichung). Aus der Elementaranalyse (71,4 Gew.-% C, 11,7 Gew.-% H, 4,6 Gew.-% N, 5,5 Gew.-% O) ergibt sich eine Zusammensetzung des Copolymeren von 1 Teil langkettig substituiertem Monomeren und 0,45 ± 0,1 Teilen Disilan-Monomer.

Beispiel 4: Radikalische Copolymerisation des Disilan-Monomers 1 mit Acrylsäure-N-octadecylamid

2,0 g Acrylsäure-N-octadecylamid und 1,244 g des Disilan-Monomers 1 werden in 20 ml Tetrahydrofuran gelöst und mit 10,2 mg Azo-bis-isobutyronitril versetzt. Die Lösung wird in einen Dreihalskolben mit Rückflußkühler (mit Gasableitungsrohr und Blasenzähler), Thermometer und Gaseinleitungsrohr gegeben und bei Raumtemperatur eine Stunde lang mit Stickstoff durchspült. Dann wird die Reaktionsmischung bis zur Siedetemperatur erhitzt und 7 Stunden unter ständigem Rühren bei Siedetemperatur gekocht. Das Polymere wird durch Eingießen der auf eine Temperatur von 20 - 25°C abgekühlten Reaktionslösung in Methanol ausgefällt und abgesaugt. Um das Produkt von Restmonomer zu befreien, wird es noch zwei Mal in Tetrahydrofuran gelöst und durch Eingießen in Methanol ausgefällt. Man erhält 1,1 g einer weißen feinkörnigen Masse, die in Methanol unlöslich und in Tetrahydrofuran löslich ist. Eine Molmassenbestimmung mittels Gelpermeationschromatographie ergibt ein $M_w$ von 4.600 und ein $M_n$ von 2.500 Dalton (Polystyrol-Eichung). Aus der Elementaranalyse (68,4 Gew.-% C, 11,1 Gew.-% H, 4,9 Gew.-% N, 5,4 Gew.-% O) ergibt sich eine Zusammensetzung des Copolymeren von 1 Teil langkettig substituiertem Monomeren und 0,9 ± 0,2 Teilen Disilan-Monomer.

Beispiel 5: Radikalische Copolymerisation des Disilan-Monomers 1 mit Acrylsäure-N-octadecylamid

2,0 g Acrylsäure-N-octadecylamid und 2,49 g des Disilan-Monomers 1 werden in 20 ml Tetrahydrofuran gelöst und mit 10,2 mg Azo-bis-isobutyronitril versetzt. Die Lösung wird in einen Dreihalskolben mit Rückflußkühler (mit Gasableitungsrohr und Blasenzähler), Thermometer und Gaseinleitungsrohr gegeben und bei einer Temperatur von 20 - 25°C eine Stunde lang mit Stickstoff durchspült. Dann wird die Reaktionsmischung bis zur Siedetemperatur erhitzt und 7 Stunden unter ständigem Rühren bei Siedetemperatur gekocht. Das Polymere wird durch Eingießen der auf 20 - 25°C abgekühlten Reaktionslösung in Methanol ausgefällt und abgesaugt. Um das Produkt von Restmonomer zu befreien, wird es noch zwei Mal in Tetrahydrofuran gelöst und durch Eingießen in Methanol ausgefällt. Man erhält 2,4 g einer weißen feinkörnigen Masse, die in Methanol unlöslich und in Tetrahydrofuran löslich ist. Eine Molmassenbestimmung mittels Gelpermeationschromatographie ergibt ein $M_w$ von 5.700 und ein $M_n$ von 4.300 Dalton

(Polystyrol-Eichung). Aus der Elementaranalyse (61,9 Gew.-% C, 11,1 Gew.-% H, 5,4 Gew.-% N) ergibt sich eine Zusammensetzung des Copolymeren von 1 Teil langkettig substituiertem Monomeren und 2,4 ± 0,1 Teilen Disilan-Monomer.

Beispiel 6: Radikalische Copolymerisation des Disilan-Monomers 1 mit Acrylsäure-N-octadecylamid

1,0 g Acrylsäure-N-octadecylamid und 3,11 g des Disilan-Monomers 1 werden in 20 ml Tetrahydrofuran gelöst und mit 5,1 mg Azo-bis-isobutyronitril versetzt. Die Lösung wird in einen Dreihalskolben mit Rückflußkühler (mit Gasableitungsrohr und Blasenzähler), Thermometer und Gaseinleitungsrohr gegeben und bei einer Temperatur von 20 - 25°C eine Stunde lang mit Stickstoff durchspült. Dann wird die Reaktionsmischung bis zur Siedetemperatur erhitzt und 7 Stunden unter ständigem Rühren bei Siedetemperatur gekocht. Das Polymere wird durch Eingießen der auf eine Temperatur von 20 - 25°C abgekühlten Reaktionslösung in Methanol ausgefällt und abgesaugt. Um das Produkt von Restmonomer zu befreien, wird es noch zwei Mal in Tetrahydrofuran gelöst und durch Eingießen in Methanol ausgefällt. Man erhält 4,2 g einer weißen feinkörnigen Masse, die in Methanol unlöslich und in Tetrahydrofuran löslich ist. Eine Molmassenbestimmung mittels Gelpermeationschromatographie ergibt ein $M_w$ von 10.000 und ein $M_n$ von 6.200 Dalton (Polystyrol-Eichung). Aus der Elementaranalyse (57,8 Gew.-% C, 10,6 Gew.-% H, 5,6 Gew.-% N) ergibt sich eine Zusammensetzung des Copolymeren von 1 Teil langkettig substituiertem Monomeren und 5,1 ± 0,6 Teilen Disilan-Monomer.

Beispiel 7: Radikalische Copolymerisation des Disilan-Monomers 2 mit Acrylsäure-N-octadecylamid

0,93 g Acrylsäure-N-octadecylamid und 0,50 g des Disilan-Monomers 2 werden in 30 ml Tetrahydrofuran gelöst und mit 4,4 mg Azo-bis-isobutyronitril versetzt. Die Lösung wird in einen Dreihalskolben mit Rückflußkühler (mit Gasbaleitungsrohr und Blasenzähler), Thermometer und Gaseinleitungsrohr gegeben und bei einer Temperatur von 20 - 25°C eine Stunde lang mit Stickstoff durchspült. Dann wird die Reaktionsmischung bis zur Siedetemperatur erhitzt und 6 Stunden unter ständigem Rühren bei Siedetemperatur gekocht. Das Polymere wird durch Eingießen der Reaktionslösung in Methanol ausgefällt und abgesaugt. Um das Produkt von Restmonomer zu befreien, wird es noch zwei Mal in Tetrahydrofuran gelöst und durch Eingießen in Methanol ausgefällt. Man erhält 0,58 g einer weißen feinkörnigen Masse, die in Methanol unlöslich und in Tetrahydrofuran löslich ist. Eine Molmassenbestimmung mittels Gelpermeationschromatographie ergibt ein $M_w$ von 5.400 und ein $M_n$ von 2.500 Dalton (Polystyrol-Eichung). Aus der Elementaranalyse (65,2 Gew.-% C, 10,3 Gew.-% H, 4,2 Gew.-% N) ergibt sich eine Zusammensetzung des Copolymeren von 1 Teil langkettig substituiertem Monomeren und 1,3 ± 0,3 Teilen Disilan-Monomer.

Beispiel 8: Radikalische Copolymerisation des Disilan-Monomers 2 mit Acrylsäure-N-octadecylamid

0,93 g Acrylsäure-N-octadecylamid und 0,99 g des Disilan-Monomers 2 werden in 30 ml Tetrahydrofuran gelöst und mit 4,4 mg Azo-bis-isobutyronitril versetzt. Die Lösung wird in einen Dreihalskolben mit Rückflußkühler (mit Gasableitungsrohr und Blasenzähler), Thermometer und Gaseinleitungsrohr gegeben und bei einer Temperatur von 20 - 25°C eine Stunde lang mit Stickstoff durchspült. Dann wird die Reaktionsmischung bis zur Siedetemperatur erhitzt und 7,5 Stunden unter ständigem Rühren bei Siedetemperatur gekocht. Das Polymere wird durch Eingießen der auf eine Temperatur von 20 - 25°C abgekühlten Reaktionslösung in Methanol ausgefällt und abgesaugt. Um das Produkt von Restmonomer zu befreien, wird es noch zwei Mal in heißem Tetrahydrofuran gelöst und durch Eingießen in Methanol ausgefällt. Man erhält 0,46 g einer weißen feinkörnigen Masse, die in Methanol unlöslich und in heißem Tetrahydrofuran löslich ist. Eine Molmassenbestimmung mittels Gelpermeationschromatographie konnte wegen der geringen Löslichkeit bei 20°C nicht durchgeführt werden. Aus der Elementaranalyse (62,1 Gew.-% C, 10,5 Gew.-% H, 4,1 Gew.-% N) ergibt sich eine Zusammensetzung des Copolymeren von 1 Teil langkettig substituiertem Monomeren und 1,3 ± 0,1 Teilen Disilan-Monomer.

Beispiel 9: Radikalische Copolymerisation des Disilan-Monomers 2 mit Acrylsäure-N-octadecylamid

0,93 g Acrylsäure-N-octadecylamid und 1,99 g des Disilan-Monomers 2 werden in 30 ml Tetrahydrofuran gelöst und mit 4,4 mg Azo-bis-isobutyronitril versetzt. Die Lösung wird in einen Dreihalskolben mit Rückflußkühler (mit Gasableitungsrohr und Blasenzähler), Thermometer und Gaseinleitungsrohr gegeben und bei einer Temperatur von 20 - 25°C eine Stunde lang mit Stickstoff durchspült. Dann wird die Reaktionsmischung bis zur Siedetemperatur erhitzt und 7,5 Stunden unter ständigem Rühren bei Siedetemperatur gekocht. Das Polymere wird durch Eingießen der auf eine Temperatur von 20 - 25 °C abgekühlten Reaktionslösung in Methanol ausgefällt und abgesaugt. Um das Produkt von Restmonomer zu befreien, wird es noch zwei Mal in heißem Tetrahydrofuran gelöst und durch Eingießen in Methanol ausgefällt. Man erhält 1,0 g einer weißen feinkörnigen Masse, die in Methanol unlöslich und in heißem Tetrahydrofuran löslich ist. Eine Molmassenbestimmung mittels Gelpermeationschromatographie konnte wegen der geringen Löslichkeit bei 20 °C nicht durchgeführt werden. Aus der Elementaranalyse (59,0 Gew.-% C, 10,0 Gew.-% H, 4,3 Gew.-% N) ergibt sich eine Zusammensetzung des Copolymeren von 1 Teil langkettig substituiertem Monomeren und 1,9 ± 0,4 Teilen Disilan-Monomer.

Beispiel 10: Schichtherstellung nach der Langmuir-Blodgett Methode

Ein Glas-Objektträger (76 mm x 26 mm) wird nach folgendem Verfahren gereinigt:
Das Glas wird eine Stunde lang in eine frisch angesetzte Mischung aus vier Teilen konz. $H_2SO_4$ und einem Teil 30 %iger $H_2O_2$, deren Temperatur 60 °C beträgt, gelegt, mit Reinstwasser abgespült und 15 Minuten lang in einer alkalischen, tensidfreien Reinigungslösung, z.B. ®Extran AP 11 (Konz. 2 - 4 g/l) bei einer Temperatur von 50 °C durch Ultraschall gereinigt. Danach wird das Glas gründlich mit Reinstwasser (18 mOhm, partikelfrei) abgespült und in einem warmen Luftstrom getrocknet. Anschließend erfolgt zur Hydrophobierung des Glases eine Behandlung mit Hexamethyldisilazan-Dampf (10 Minuten bei einer Temperatur von 70 °C).

Multischichten aus dem in Beispiel 3 hergestellten Polymeren werden nach dem Verfahren von Langmuir und Blodgett auf den Glasträger übertragen, indem in einer Langmuir-Filmwaage 0,2 $cm^3$ einer Lösung von 9,3 mg des Polymeren in 10 $cm^3$ einer Mischung aus Methylenchlorid und Tetrahydrofuran 9:1 (relative Volumina) auf einer wäßrigen Subphase bei einer Subphasentemperatur von 10 °C gespreitet werden. Durch Verkleinerung der monofilmbedeckten Wasseroberfläche wird der Schub auf 20 mN/m eingeregelt und bei diesem Wert konstant gehalten. Der Träger wird nun senkrecht von oben durch die Wasseroberfläche in die Filmwaage eingetaucht (Eintauchgeschwindigkeit: 20 mm/min) und nach einer kurzen Pause (10 sec.) am unteren Umkehrpunkt wieder herausgenommen (Austauchgeschwindigkeit: 20 mm/min.). Sowohl beim Eintauch- als auch beim Austauchvorgang wird dabei eine Monolage auf den Träger übertragen. Durch mehrfache Wiederholung des Tauchvorgangs nach jeweils einer Minute Wartezeit am oberen Umkehrpunkt werden insgesamt 10 Doppelschichten übertragen. Die Übertragungsverhältnisse liegen bei 90 %. Es werden, auch bei Übertragung von 50 und mehr Monolagen optisch klare, transparente Schichten erhalten.

Nach der gleichen Verfahrensweise werden auch Schichten aus den in den Beispielen 4, 5 und 6 hergestellten Polymeren erhalten. Die Übertragungsbedingungen hierbei sind:

| Polymer aus Beispiel: | 4 | 5 | 6 |
|---|---|---|---|
| Subphasentemperatur:<br>Schub:<br>Übertragungsverhältnis: | 10 °C<br>20 mN/m<br>90 % | 10 °C<br>20 mN/m<br>70 % | 10 °C<br>20 mN/m<br>80 % |

Beispiel 11: Ellipsometrische Schichtdicken- und Brechungsindexmessungen

Siliziumplättchen (40 mm x 10 mm) werden aus einem Siliziumwafer herausgeschnitten und wie folgt gereinigt:

1. 1 Stunde Behandlung in einer frisch angesetzten Mischung aus einem Teil 30 %iger $H_2O_2$ und vier Teilen konz. $H_2SO_4$, deren Temperatur 60 °C beträgt. Anschließend wird mit Reinstwasser abgespült.
2. Eintauchen in $NH_4F$-gepufferte HF-Lösung für 30 Sekunden und anschließend wieder mit Reinstwasser abspülen. Nach dieser Behandlung sind die Siliziumplättchen hydrophob (Kontaktwinkel zu Wasser: 75 °).

Schichten der in den Beispielen 3, 4, 5 und 6 hergestellten Polymeren werden nach dem Verfahren von langmuir und Blodgett unter den gleichen Bedingungen wie in Beispiel 10 auf das Siliziumplättchen übertragen. Es werden jeweils Proben mit 10, 30, 50 und 70 Monolagen der einzelnen Polymeren hergestellt und ellipsometrisch die Schichtdicken und der Brechungsindex der LB-Filme gemessen.

Ergebnisse der Messungen:

| Polymere aus Beispiel: | 3 | 4 | 5 | 6 |
|---|---|---|---|---|
| Brechungsindex bei 633 nm:<br>Schichtdicke in nm/Monolage: | 1,499<br>1,990 | 1,486<br>1,460 | 1,454<br>0,698 | 1,477<br>0,830 |

Beispiel 12: Messungen der thermischen Stabilität

Siliziumplättchen (40 mm x 10 mm) werden aus einem thermisch oxidierten Siliziumwafer (Dicke der Oxidschicht: 160 nm) herausgeschnitten und eine Stunde lang bei einer Temperatur von 60 ° C in eine frisch zubereitete Mischung aus einem Teil 30 %iger $H_2O_2$ und vier Teilen konz. $H_2SO_4$ gelegt. Nach gründlichem Abspülen mit Reinstwasser wird das Plättchen 15 Minuten lang bei einer Temperatur von 50 ° C in einem Ultraschallbad mit einer alkalischen, tensidfreien Reinigungslösung, z.B. ®Extran AP 11 (Konz. 2 - 4 g/l) behandelt, mit Reinstwasser gründlich abgespült und in einem warmen Luftstrom getrocknet. Danach erfolgt zur Hydrophobierung eine Behandlung mit Hexamethyldisilazan-Dampf (10 Minuten bei einer Temperatur von 70 ° C).

Die Beschichtung nach der LB-Methode mit jeweils 8 Monolagen erfolgt mit den in den Beispielen 3, 4, 5 und 6 hergestellten Polymeren wie in Beispiel 10 beschrieben.

Der beschichtete Träger wird in einer speziellen Apparatur mit linearem Temperaturgradienten (0,5 ° C/sec) aufgeheizt. Während des Aufheizvorgangs wird die Dicke der LB-Schicht anhand der Intensität eines von der Probe reflektierten, senkrecht polarisierten Laserstrahls (633 nm) gemessen. Die Temperatur, bei der die erste Änderung der Schichtdicke erfolgt, beträgt bei Schichten aus dem in Beispiel 3 hergestellten Polymeren 140 ° C, bei Schichten aus dem in Beispiel 4 hergestellten Polymeren 130 ° C, bei Schichten aus dem in Beispiel 5 hergestellten Polymeren 120 ° C und bei Schichten aus dem in Beispiel 6 hergestellten Polymeren 130 ° C. (Zum Vergleich: Bei LB-Schichten aus 22-Tricosensäure beträgt diese Temperatur 70 ° C.)

Beispiel 13: Messungen der kritischen Oberflächenspannung

Siliziumplättchen (40 mm x 10 mm) werden wie in Beispiel 11 gereinigt und wie in Beispiel 11 jeweils mit acht Monolagen der in den Beispielen 3, 4, 5 und 6 hergestellten Polymeren beschichtet. Auf die Oberfläche der übertragenen Schichten werden Flüssigkeitstropfen einer Reihe von n-Alkanen ($C_9H_{20}$ - $C_{16}H_{34}$) gebracht und die Kontaktwinkel der Flüssigkeitstropfen mit der Oberfläche gemessen. Aus diesen Kontaktwinkeln wird nach dem Verfahren von Zisman (W.A. Zisman, Adv. Chem. Ser., 43 (1964), 1-51 und Phys. Chem. Surfaces, A.W. Adamson, New York 1982) die kritische Oberflächenspannung bestimmt. Es ergeben sich folgende Werte:

| Polymer aus Beispiel | krit. Oberflächenspannung [mN/m] |
|---|---|
| 3 | 21,7 |
| 4 | 23,8 |
| 5 | 25,2 |
| 6 | 25,2 |
| (Zum Vergleich: Bei einer Polyethylen-Oberfläche ergibt sich bei dieser Messung ein Wert von 31 mN/m). | |

**Patentansprüche**

**1.** Amphiphile, silanylgruppenhaltige Copolymere enthaltend Struktureinheiten abgeleitet von mindestens einem Monomer der allgemeinen Formel I

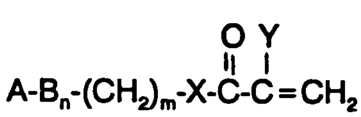

(I)

und mindestens einem Monomer der allgemeinen Formel II

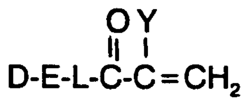

(II)

wobei

A- = $CH_3$- oder $CF_3$ ist,
-B- = -$CH_2$- oder -$CF_2$- ist,
n eine ganze Zahl von 5 bis 25 ist,
m eine ganze Zahl von Null bis 12 ist,
-X- = -O-, -$NR^1$- oder -Z- ist, worin
$R^1$ = H-, $CH_3$-$(CH_2)_n$- oder $CF_3$-$(CF_2)_n$-$(CH_2)_m$-
-Z- = -X'-$(CH_2)_p$-X' oder

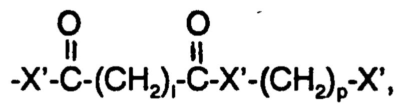

p eine ganze Zahl von 2 bis 10,
l eine ganze Zahl von 1 bis 10 und
-X'- = -O- oder -$NR^1$- ist,
-Y = -H, -$CH_3$, -CN, -Cl, -Br oder -F ist,
-D = -$SiR^2(SiR^2_3)_2$, -$Si(SiR^2_3)_3$, -$SiR^2_2$-$SiR^2_3$ oder -$(SiR^2_2)_2$-$SiR^2_3$ ist, worin $R^2$ $C_1$-$C_3$-Alkyl bedeutet,
-E- = $C_1$-$C_4$-Alkylen ist und
-L- = -O-, -$NR^1$-,

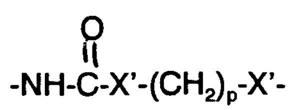

oder

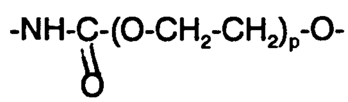

ist.

2. Copolymere gemäß Anspruch 1, dadurch gekennzeichnet, daß -X- = -O-, -NH- oder -Z- ist, -X'- = -O- oder -NH- bedeutet, -D = -$(SiR^2_2)$-$SiR^3_3$ ist, $R_2$ = Methyl ist, -E- = $C_2$-Alkylen ist, -L- = -NH- oder

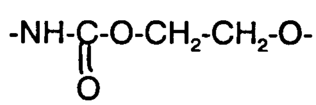

ist und -Y = -H oder -$CH_3$ ist.

3. Copolymere gemäß Anspruch 1, dadurch gekennzeichnet, daß der Anteil von Struktureinheiten abgeleitet von silanylgruppenhaltigen Monomeren gemäß Formel II 5 bis 98 Gew.-% und der Anteil von Struktureinheiten abgeleitet von Monomeren gemäß Formel I 95 bis 2 Gew.-% beträgt, wobei sich die

Anteile der Struktureinheiten auf insgesamt 100 Gew.-% ergänzen.

4. Copolymere gemäß Anspruch 3, dadurch gekennzeichnet, daß der Anteil von Struktureinheiten abgeleitet von silanylgruppenhaltigen Monomeren gemäß Formel II 30 bis 85 Gew.-% und der Anteil von Struktureinheiten abgeleitet von Monomeren gemäß Formel I 70 bis 15 Gew.-% beträgt.

5. Copolymere gemäß Anspruch 1 enthaltend Struktureinheiten, abgeleitet von mindestens je einem Monomeren gemäß Formel I und II und mindestens einem weiteren funktionellen Comonomeren.

6. Copolymere gemäß Anspruch 5, dadurch gekennzeichnet, daß die von einem weiteren funktionellen Comonomeren abgeleiteten Struktureinheiten strahlenvernetzbare Einheiten tragen.

7. Copolymere gemäß Anspruch 5, dadurch gekennzeichnet, daß die Anteile der Struktureinheiten abgeleitet von Monomeren der Formel I 90 bis 5, Monomeren der Formel II 5 bis 90 und weiteren funktionellen Comonomeren 5 bis 60 Gew.-% betragen, wobei sich die Anteile der Struktureinheiten auf 100 Gew.-% ergänzen.

8. Copolymere gemäß Anspruch 7, dadurch gekennzeichnet, daß die Anteile der Struktureinheiten abgeleitet von Monomeren der Formel I 60 bis 20, Monomeren der Formel II 20 bis 60 und weiteren funktionellen Comonomeren 20 bis 40 Gew.-% betragen.

9. Schichtelement aus einem auf einen Träger aufgebrachten Film, bestehend aus mindestens einer monomolekularen Schicht, die Copolymere gemäß Anspruch 1 oder 5 enthält.

10. Verfahren zur Herstellung eines Schichtelementes gemäß Anspruch 9, dadurch gekennzeichnet, daß man mindestens ein Copolymer gemäß Anspruch 1 oder 5 in einem flüchtigen organischen mit Wasser nicht mischbaren Lösemittel löst, die Lösung an der Grenzfläche Wasser/Luft spreitet, die entstehende Schicht nach Verdunsten des Lösemittels komprimiert und nach der Langmuir-Blodgett-Technik auf einen festen Schichtträger überträgt.

11. Verwendung des Schichtelementes gemäß Anspruch 9 für optische Zwecke.

12. Verwendung eines Schichtelementes aus einem auf einen Träger aufgebrachten Film, bestehend aus mindestens einer monomolekularen Schicht, die Copolymere gemäß Anspruch 6 enthält, für lithographische Zwecke.

**Patentansprüche für folgenden Vertragsstaat : GR**

1. Verfahren zur Herstellung von amphphilen, silanylgruppenhaltigen Copolymeren, dadurch gekennzeichnet, daß man mindestens ein Monomer der allgemeinen Formel I

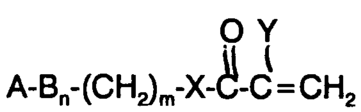

(I)

und mindestens ein Monomer der allgemeinen Formel II

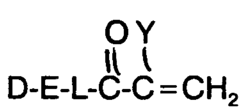

(II)

wobei

A- = $CH_3$- oder $CF_3$ ist,

-B- = $-CH_2$- oder $-CF_2$- ist,

| | |
|---|---|
| n | eine ganze Zahl von 5 bis 25 ist, |
| m | eine ganze Zahl von Null bis 12 ist, |
| -X- = | -O-, $-NR^1-$ oder -Z- ist, worin |
| $R^1$ = | H-, $CH_3-(CH_2)_n-$ oder $CF_3-(CF_2)_n-(CH_2)_m-$ |
| -Z- = | $-X'-(CH_2)_p-X'$ oder |

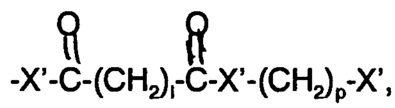

| | |
|---|---|
| p | eine ganze Zahl von 2 bis 10, |
| l | eine ganze Zahl von 1 bis 10 und |
| -X'- = | -O- oder $-NR^1-$ ist, |
| -Y = | -H, $-CH_3$, -CN, -Cl, -Br oder -F ist, |
| -D = | $-SiR^2(SiR^2_3)_2$, $-Si(SiR^2_3)_3$, $-SiR^2_2-SiR^2_3$ oder $-(SiR^2_2)_2-SiR^2_3$ ist, worin $R^2$ $C_1$-$C_3$-Alkyl bedeutet, |
| -E- = | $C_1$-$C_4$-Alkylen ist und |
| -L- = | -O-, $-NR^1-$, |

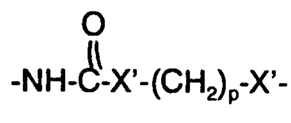

oder

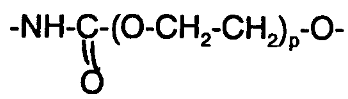

ist,

in einem Lösungsmittel löst, das Gemisch in Gegenwart eines Radikalbildners polymerisiert und das gebildete Copolymere vom Lösungsmittel abtrennt.

**2.** Verfahren gemäß Anspruch 1, dadurch gekennzeichnet, daß man der zu polymerisierenden Lösung ein weiteres funktionelles Comonomer zufügt.

**3.** Verfahren nach Anspruch 2, dadurch gekennzeichnet, daß das funktionelle Comonomer mindestens zwei polymerisierbare olefinische Doppelbindungen enthält.

**4.** Schichtelement aus einem auf einen Träger aufgebrachten Film, bestehend aus mindestens einer monomolekularen Schicht, die mindestens ein amphiphiles, silanylgruppenhaltiges Copolymer enthält, das Struktureinheiten abgeleitet von mindestens einem Monomer der allgemeinen Formel I

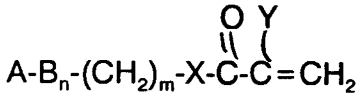

(I)

und mindestens einem Monomer der allgemeinen Formel II

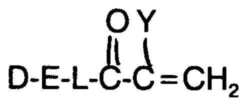

(II)

wobei

| | |
|---|---|
| A- = | $CH_3$- oder $CF_3$ ist, |
| -B- = | -$CH_2$- oder -$CF_2$- ist, |
| n | eine ganze Zahl von 5 bis 25 ist, |
| m | eine ganze Zahl von Null bis 12 ist, |
| -X- = | -O-, -$NR^1$- oder -Z- ist, worin |
| $R^1$ = | H-, $CH_3$-$(CH_2)_n$- oder $CF_3$-$(CF_2)_n$-$(CH_2)_m$- |
| -Z- = | -X'-$(CH_2)_p$-X' oder |

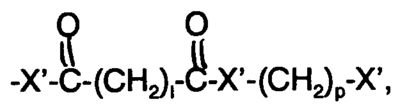

| | |
|---|---|
| p | eine ganze Zahl von 2 bis 10, |
| l | eine ganze Zahl von 1 bis 10 und |
| -X'- = | -O- oder -$NR^1$- ist, |
| -Y = | -H, -$CH_3$, -CN, -Cl, -Br oder -F ist, |
| -D = | -$SiR^2(SiR^2{}_3)_2$, -$Si(SiR^2{}_3)_3$, -$SiR^2{}_2$-$SiR^2{}_3$ oder -$(SiR^2{}_2)_2$-$SiR^2{}_3$ ist, worin $R^2$ $C_1$-$C_3$-Alkyl bedeutet, |
| -E- = | $C_1$-$C_4$-Alkylen ist und |
| -L- = | -O-, -$NR^1$-, |

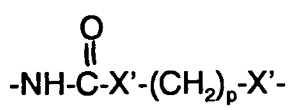

oder

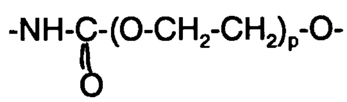

ist,

aufweist.

5. Schichtelement gemäß Anspruch 4, dadurch gekennzeichnet, daß das Copolymere des Films mindestens ein weiteres Comonomer enthält, das strahlenvernetzbare Einheiten trägt.

6. Verfahren zur Herstellung eines Schichtelementes gemäß Anspruch 4, dadurch gekennzeichnet, daß man mindestens ein amphiphiles, silanylgruppenhaltiges Copolymer enthaltend Struktureinheiten abgeleitet von mindestens einem Monomer der allgemeinen Formel I

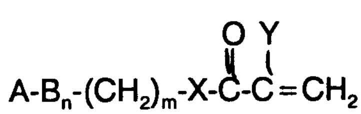

(I)

und mindestens einem Monomer der allgemeinen Formel II

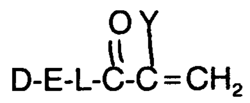

(II)

wobei

A- = $CH_3$- oder $CF_3$ ist,
-B- = -$CH_2$- oder -$CF_2$- ist,
n eine ganze Zahl von 5 bis 25 ist,
m eine ganze Zahl von Null bis 12 ist,
-X- = -O-, -$NR^1$- oder -Z- ist, worin
$R^1$ = H-, $CH_3$-$(CH_2)_n$- oder $CF_3$-$(CF_2)_n$-$(CH_2)_m$-
-Z- = -X'-$(CH_2)_p$-X' oder

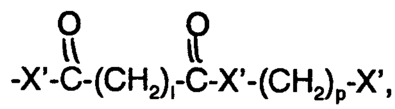

p eine ganze Zahl von 2 bis 10,
l eine ganze Zahl von 1 bis 10 und
-X'- = -O- oder -$NR^1$- ist,
-Y = -H, -$CH_3$, -CN, -Cl, -Br oder -F ist,
-D = -$SiR^2(SiR^2{}_3)_2$, -$Si(SiR^2{}_3)_3$, -$SiR^2{}_2$-$SiR^2{}_3$ oder -$(SiR^2{}_2)_2$-$SiR^2{}_3$ ist, worin $R^2$ $C_1$-$C_3$-Alkyl bedeutet,
-E- = $C_1$-$C_4$-Alkylen ist und
-L- = -O-, -$NR^1$-,

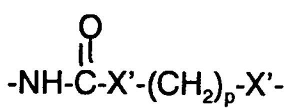

oder

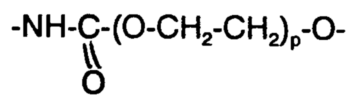

ist,

in einem flüchtigen organischen mit Wasser nicht mischbaren Lösemittel löst, die Lösung an der Grenzfläche Wasser/Luft spreitet, die entstehende Schicht nach Verdunsten des Lösemittels komprimiert und nach der Langmuir-Blodgett-Technik auf einen festen Schichtträger überträgt.

7. Verwendung des Schichtelementes gemäß Anspruch 4 für optische Zwecke.

8. Verwendung des Schichtelementes gemäß Anspruch 5 für lithographische Zwecke.

Europäisches Patentamt

# EUROPÄISCHER RECHERCHENBERICHT

Nummer der Anmeldung

EP 92 10 3535

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 336 276 (HOECHST)<br>--- | 1-12 | C08F230/08 |
| D,A | WO-A-8 303 165 (NATIONAL RESEARCH DEVELOPMENT CORPORATION)<br>--- | 1-12 | |
| A | WO-A-8 809 527 (HUGHES AIRCRAFT COMPANY)<br>----- | 1-6 | |

RECHERCHIERTE SACHGEBIETE (Int. Cl.5 )

C08F
B05D
C07F

Der vorliegende Recherchenbericht wurde für alle Patentansprüche erstellt

| Recherchenort | Abschlußdatum der Recherche | Prüfer |
|---|---|---|
| DEN HAAG | 11 JUNI 1992 | ANDRIOLLO G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)